(19) Europäisches Patentamt / European Patent Office / Office européen des brevets

(11) **EP 2 179 134 B1**

(12) **EUROPEAN PATENT SPECIFICATION**

(45) Date of publication and mention
of the grant of the patent:
**10.01.2018 Bulletin 2018/02**

(21) Application number: **08797249.3**

(22) Date of filing: **06.08.2008**

(51) Int Cl.:
*E21B 47/02* (2006.01)   *E21B 49/00* (2006.01)

(86) International application number:
**PCT/US2008/072296**

(87) International publication number:
**WO 2009/021010 (12.02.2009 Gazette 2009/07)**

(54) **SYSTEM AND METHOD FOR STRESS FIELD BASED WELLBORE STEERING**

SYSTEM UND VERFAHREN FÜR SPANNUNGSFELDBASIERTE BOHRLOCHLENKUNG

SYSTÈME ET PROCÉDÉ DE GUIDAGE DE PUITS DE FORAGE À BASE DE CHAMP DE CHAMP DE CONTRAINTE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.08.2007 US 963701 P**

(43) Date of publication of application:
**28.04.2010 Bulletin 2010/17**

(73) Proprietor: **GeoMechanics International**
**Houston, TX 77056 (US)**

(72) Inventors:
• **MOOS, Daniel**
  **Palo Alta, CA 94303 (US)**
• **HASSAN, Gamal, A.**
  **Houston, TX 77068 (US)**
• **GEORGI, Daniel, T.**
  **Houston, TX 77079 (US)**
• **CASTILLO, David, A.**
  **Trigg, Western Australia 6029 (AU)**
• **FABIAN, John**
  **The Woodlands, TX 77381 (US)**

(74) Representative: **Bridge, Kerry Ann**
**Dehns**
**St Bride's House**
**10 Salisbury Square**
**London EC4Y 8JD (GB)**

(56) References cited:
**US-A- 4 713 968    US-A- 4 781 062**
**US-A- 5 044 462    US-A- 5 181 421**
**US-A- 5 318 123    US-A1- 2005 150 689**

• **IAIN REZMER-COOPER ET AL: "The Use of Resistivity-at-the-Bit Images and Annular Pressure While Drilling in Preventing Drilling Problems (IADC / SPE 59225)", 2000 IADC/SPE DRILLING CONFERENCE, vol. IADC/SPE 59225, 23 February 2000 (2000-02-23), pages 1-13, XP055083017, New Orleans, Louisiana, USA**

**Description**

The present disclosure relates generally to hydrocarbon exploration and production, and more particularly relates to a method and system for guiding the trajectory of a wellbore.

In the early years of oil drilling and production, wells were primarily drilled on land, to moderate depths, and with relatively minor horizontal offsets. An empirical understanding of the impact of geological forces and earth material properties on required drilling and development practice was developed region by region. Successful practices were defined by trial and (sometimes costly and spectacular) error. It was only once local conditions were understood that it became possible to drill and complete new wells with a sufficient degree of confidence to guarantee the safety and economic success of further field developments. However, techniques that were successful in one field were not necessarily successful in other fields, and therefore the trial and error learning process often had to be repeated.

As wells have become more expensive and complex, both in terms of well geometry (reach and length) and access to deep, high temperature, high pore pressure, and high stress regimes, it has become clear that the economic success of field developments can only be assured if geology and tectonics are understood and field activities are designed with that understanding. Furthermore, constraints on engineering practice based on environmental and societal requirements necessitate specially designed mud formulations and drilling techniques. Development and application of these solutions depends critically not only on an understanding of the processes that act within the earth, but also of the impact of these processes on drilling and completion practice. The study of these processes, and of the interactions between them and their effect on earth materials, is called geomechanics.

Iain Rezmer-Cooper ET AL: "The Use of Resistivity-at-the-Bit Images and Annular Pressure While Drilling in Preventing Drilling Problems (IADC/SPE 59225)", 2000 IADC/SPE Drilling Conference, vol. IADC/SPE 59225, 23 February 2000 (2000-02-23), pages 1-13, XP055083017, New Orleans, Louisiana, USA describes a classification scheme based on three-dimensional linear elasticity used in conjunction with wellbore stability analysis. US 5318123 A describes a method for optimizing hydraulic fracturing through control of perforation orientation. US 4713968 describes a method and apparatus for measuring the mechanical anisotropy of a material.

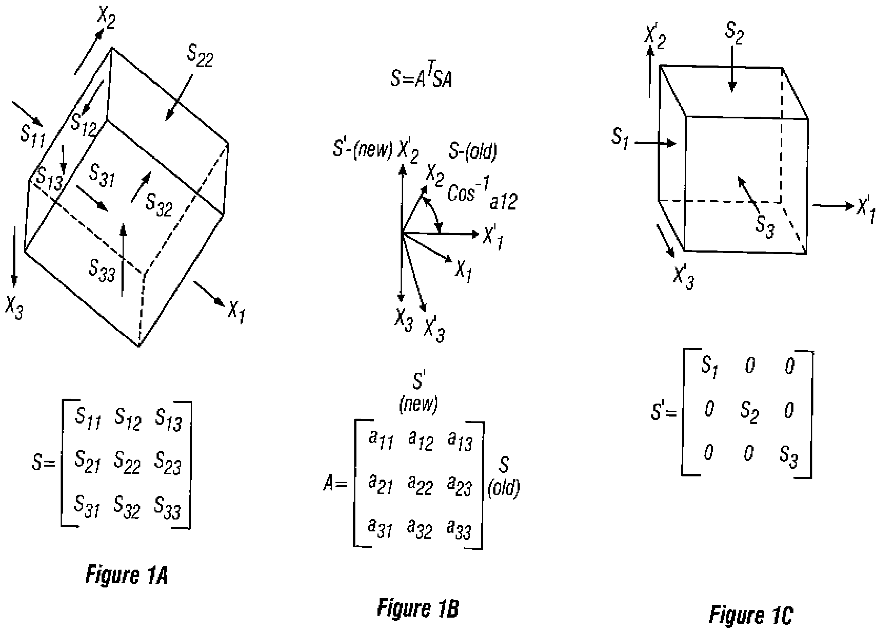

Those of ordinary skill in the art will understand that forces in the earth are quantified by means of a stress tensor, in which the individual components are tractions (with dimensions of force per unit area) acting perpendicular or parallel to three planes that are in turn orthogonal to each other. The normals to the three orthogonal planes define a Cartesian coordinate system ($x_1$, $x_2$, $x_3$). **Figures 1a, 1b,** and **1c** together illustrate (**Figure 1a**) definitions of the stress tensor in Cartesian coordinates; (**Figure 1b**) tensor transformation through direction cosines; and (**Figure 1c**) the principal stress axes.

The stress tensor has nine components, each of which has an orientation and a magnitude, as shown in **Figure 1a.** Three of these components are normal stresses, in which the force is applied perpendicular to the plane ($S_{11}$ is the stress component acting normal to a plane perpendicular to the $x_1$-axis); the other six are shear stresses, in which the force is applied along the plane in a particular direction (e.g., $S_{12}$ is the force acting in the $x_2$-direction along a plane perpendicular to the $x_1$-axis). In all cases, $S_{rj} = S_{ji}$, which reduces the number of independent stress components to six.

At each point there exists a particular stress axis orientation for which all shear stress components are zero, whose directions are referred to as the principal stress directions. The magnitudes of the three principal stresses acting in these directions are $S_1$, $S_2$, and $S_3$, corresponding to the greatest principal stress, the intermediate principal stress, and the least principal stress, respectively. Coordinate transformations between the principal stress tensor and any other arbitrarily oriented stress tensor are accomplished through tensor rotations. It has been found in most parts of the world that, at depths within reach of the drill bit, the stress acting vertically on a horizontal plane (defined as the vertical stress, $S_v$) is a principal stress. This requires that the other two principal stresses lie in a horizontal plane. Because these horizontal stresses almost always have different magnitudes, they are referred to as the greatest horizontal stress, $S_{Hmax}$ and the least horizontal stress, $S_{Hmin}$.

There are a number of different sources of stress in the Earth. Plate tectonic driving forces have constant orientations over wide areas. They are caused by a variety of effects, including ridge push from mid-ocean ridges, slab pull where plates are being subducted, collision resistance forces at converging plate margins such as in Trinidad or the Himalayas, forces along transform faults where plates are moving laterally past each other such as the San Andreas fault in California, and suction above subduction zones such as the NE of Australia.

Another source of stresses in the Earth is referred to as topographic loads, which can be due to large mountain chains such as the Canadian Rockies or the Himalayas, or from addition or removal of loads due to ice sheets or changes in sea level. In this category are gravitational loads such as those associated with sedimentation within basins, and down-slope extensional loads within active depositional sequences.

Lithostatic buoyancy constitutes another category of stress in the Earth because the lithosphere is lower in density than the underlying asthenosphere, it "floats" on the underlying material, and sediment loading and lateral changes in lithospheric thickness or density cause bending forces to develop. Flexural forces, still another category of stress, are generated due to localized topographic loads and to the forces acting on down-going slabs in subduction zones. Finally, earthquakes (slip on faults), active volcanism, and salt diapirism are all examples of processes that act to change local stresses.

Of each of the foregoing categories of stress, the processes that contribute to the *in situ* stress field primarily include plate tectonic driving forces and gravitational loading. Plate tectonic driving forces cause the motions of the lithospheric plates that form the crust of the earth. Gravitational loading forces include topographic loads and loads due to lateral density contrasts and lithospheric buoyancy. These are modified by the locally acting effects of processes such as volcanism, earthquakes (fault slip), and salt diapirism. Human activities, such as mining and fluid extraction or injection, can also cause local stress changes.

Because the largest components of the stress field (gravitational loading and plate driving stresses) act over large areas, stress orientations and magnitudes in the crust are remarkably uniform. However, local perturbations, both natural and man-made, are important to consider for application of geomechanical analyses to drilling and reservoir engineering. There are countless real-world examples of regions wherein the individual stress orientations within fields in the region are quite uniform, the stress varies systematically among the individual fields. It is also well known to those of ordinary skill in the art that stresses can be different within different geological layers, or within different fault blocks within the earth, and that adjacent to local sources of stress perturbation the stresses can change with position on a foot-by-foot basis.

Vertical stress can be the greatest, the intermediate, or the least principal stress. A classification scheme has been used to describe these three possibilities based on the type of faulting that would occur in each case. Table 1 sets forth definitions of the greatest principal stress ($S_1$) and the least principal stress ($S_3$) for different fault classifications.

**TABLE 1**

| FAULT REGIME | $S_1$ | $S_3$ |
|---|---|---|
| Normal | $S_V$ | $S_{Hmin}$ |
| Strike-slip | $S_{Hmax}$ | $S_{Hmin}$ |
| Reverse | $S_{Hmax}$ | $S_V$ |

A normal faulting regime is one in which the vertical stress is the greatest stress. When the vertical stress is the intermediate stress, a strike-slip regime is indicated. If the vertical stress is the least stress, the regime is defined to be reverse. The horizontal stresses at a given depth will be smallest in a normal faulting regime, larger in a strike-slip regime, and greatest in a reverse faulting regime. In general, vertical wells are found to be progressively less stable as the regime changes from normal to strike-slip to reverse, and consequently require higher mud weights to drill.

Those of ordinary skill in the art will appreciate the desirability in many instances of drilling wellbores in particular orientations relative to the *in situ* stresses present along the wellbore trajectory. In particular, positioning a well in a specific orientation with respect to the *in situ* stress field or in a specific geological horizon selected on the basis of the state of stress can significantly improve or degrade the performance of the completed well. In the latter case, it is well known that placing a well within a geological horizon with a lower stress can improve the efficiency of hydraulic fracturing as well as its effectiveness for production or injection. This is in part because when the stress magnitude is smaller it requires a lower pressure to induce a fracture by fluid injection, and also in part because when the stress magnitude is smaller it is easier to maintain the desired fracture aperture and flow properties over the life of the well.

It is also well known that the orientation of a well with respect to the stresses can also improve or degrade the efficiency with which a well can be completed using other techniques such as by means of first casing and then perforating the casing in the well to connect the well to the fluid-bearing formation. The orientation of the well with respect to the stresses can also affect the cost of the installed hardware necessary to achieve well objectives. Such objectives are discussed in further detail in U.S. Patent No. 7,181,380 to Dusterhoft et al., having the same assignee as the present disclosure. As disclosed in *Dusterhoft,* obtained information regarding pore pressure depletion, stress magnitudes and orientations, and strength of rock formation from hydrocarbon recovery modeling is used to determine optimum well completion design including the selection of a completion type, trajectory, and location. Additionally, the process may also consider probable failure mechanisms and identified completion requirements, and their corresponding effect on completion options.

One example of the benefit of optimally orienting a well trajectory with respect to the *in situ* stress field is in the case of a naturally fractured reservoir, where the flow properties of the natural fractures (which may have random or multiple orientations) depend on their orientation with respect to the principal stresses. In many cases the most permeable fractures in the earth are the subset of fractures that are optimally oriented for slip under the current stress field. In any case, the orientations of the natural fractures most likely to be permeable (the optimally oriented fractures) can be determined if the stress orientations and magnitudes are known. Because wells drilled perpendicular to the optimally oriented fractures will intersect the greatest number of these fractures and thus will have the highest likelihood of maximizing fluid flow connectivity to those fractures, it is possible simply by knowing the magnitudes and orientations of the stresses to select the best well orientation to maximize fluid flow between the well and the natural fractures in the earth.

In many cases, maximizing productivity or injectivity requires maximizing connections to natural fractures. In other cases, it is preferred to minimize connections to permeable fractures. Wells that achieve this latter objective have orientations that can also be computed using known techniques, but only if the stress magnitudes and orientations are known. Since stresses vary locally, it is advantageous in either case to have a method to determine the stresses and their orientations while the well is being drilled and to have the ability to change the well orientation if the stresses change. Knowing the stresses and their orientations then allows identifying in the current well on a foot-by-foot basis the degree of connection of the well to naturally permeable fractures, which in turn allows in either case selection of the best locations for perforations in cased and perforated wells.

Another example of the benefit of optimally orienting a well is in the case of a well that is to be completed by stimulation using hydraulic fracturing. Hydraulic fractures are known to propagate in most earth materials in directions such that they are perpendicular to the least principal stress. Therefore, wells that are drilled parallel to the least principal stress ($S_{Hmin}$), when stimulated using hydraulic fracturing, will have fractures that are perpendicular to the well axis. In a cased and perforated well, selectively perforating at discrete intervals and selectively stimulating each interval separately will result in a series of parallel fractures extending radially away from the well. This is optimal in certain circumstances to efficiently achieve maximum production from a field (or, in the case of so-called disposal wells, to achieve maximum injectivity for fluid disposal). In other cases, it is desirable to drill a well such that a single fracture is created by hydraulically stimulating the well that lies along the well axis. In this case, it is desirable to drill the well parallel to the intermediate or to the greatest principal stress. Wells drilled in orientations that deviate only a small amount from these optimal orientations will be much more difficult to stimulate, and will have geometries of the induced fractures that are significantly different from the desired geometries. Because stresses can vary locally, it is desirable to know on a localized basis (e.g., foot-by-foot) the local orientation of the stress field, so that fracture stimulations can be selectively carried out only where the well has the best orientation with respect to the local *in situ* stress field to achieve the desired result.

Although these and other advantages to optimally orienting wellbores relative to stress fields are known to persons of ordinary skill in the art, there remains an unmet demand for improvement in the manner by which wellbores can be so optimally oriented.

One embodiment of the disclosure is a method of evaluating an earth formation. The method includes conveying a bottomhole assembly (BHA) into a borehole; making measurements indicative of a stress in the formation during rotation of the BHA; using the measurements indicative of the stress in the formation for estimating an azimuthal variation of the stress in the formation; and altering a drilling parameter of the BHA using the estimated azimuthal variation of the stress in the formation.

Another embodiment of the disclosure is a system for evaluating an earth formation. The system includes a bottomhole assembly (BHA) configured to be conveyed into a borehole; a sensor assembly on the BHA configured to make measurements indicative of a stress in the formation during rotation of the BHA; and at least one processor configured to use the measurements indicative of the stress in the formation to estimate an azimuthal variation of the stress in the formation, and alter a drilling parameter of the BHA using the estimated azimuthal variation of the stress in the formation.

Another embodiment of the disclosure is a computer-readable medium accessible to a processor, the computer-readable medium including instructions which enable the processor to: use measurements indicative of a stress in the formation to estimate an azimuthal variation of stress in the formation; and alter a drilling parameter of a bottomhole assembly (BHA) using the estimated azimuthal variation of the stress in the formation.

The foregoing and other features and aspects of the present disclosure will be best appreciated by reference to a detailed description of the specific embodiments of the disclosure, when read in conjunction with the accompanying drawings, wherein:

Figure 1a schematically illustrates a stress tensor S in an arbitrary Cartesian coordinate system;
Figure 1b depicts a tensor transformation corresponding to rotation of the axes of the system in Figure 1a;
Figure 1c schematically illustrate a principal stress tensor S' in Cartesian coordinates, including the greatest principal stress $S_1$, the intermediate principal stress $S_2$, and the least principal stress $S_3$;
Figure 2 is a flow diagram illustrating a preferred methodology for practicing the present disclosure;
Figure 3 schematically illustrates a drilling system suitable for use with the present disclosure;
Figure 4 shows the principle of fitting an ellipse to data points;
Figure 5 shows the relationship between the maximum principal stress and induced tensile fractures in the formation;
Figure 6a shows an exemplary acoustic image of a borehole wall;
Figure 6b shows an exemplary resistivity image of a borehole wall;

Figure 7 shows a breakout analysis of a portion of a borehole where the toolface angle falls within the breakout region;

Figure 8 shows a breakout analysis of a portion of a borehole where the toolface angle is outside the breakout;

Figure 9 shows a weakened borehole due to stress;

Figure 10 shows a simulated stress and tensile failure pattern in a horizontal borehole drilled parallel to the direction of maximum horizontal stress;

Figure 1 shows a simulated stress and tensile failure pattern in a horizontal borehole when the azimuth of the maximum horizontal stress is 10° greater than the azimuth of the borehole; and

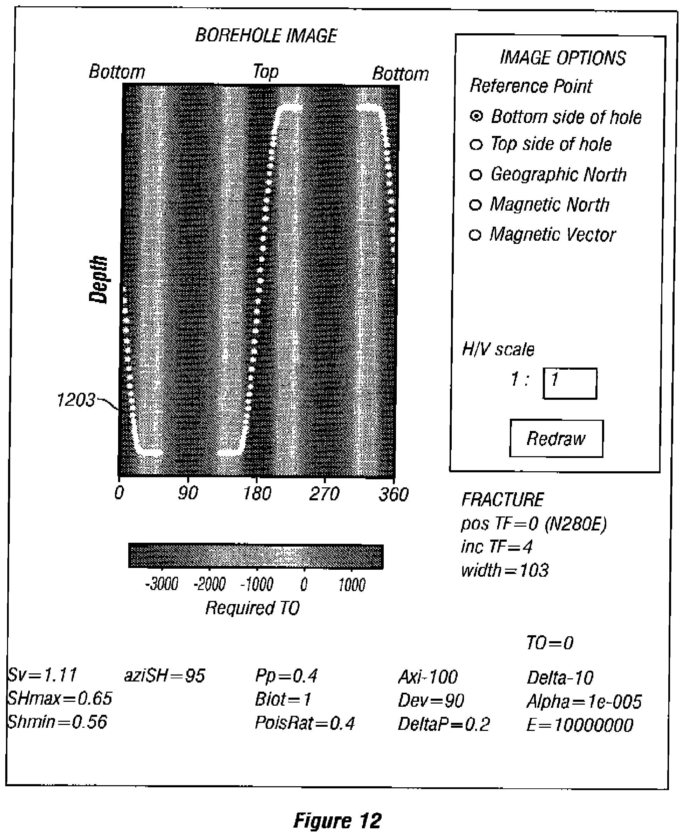

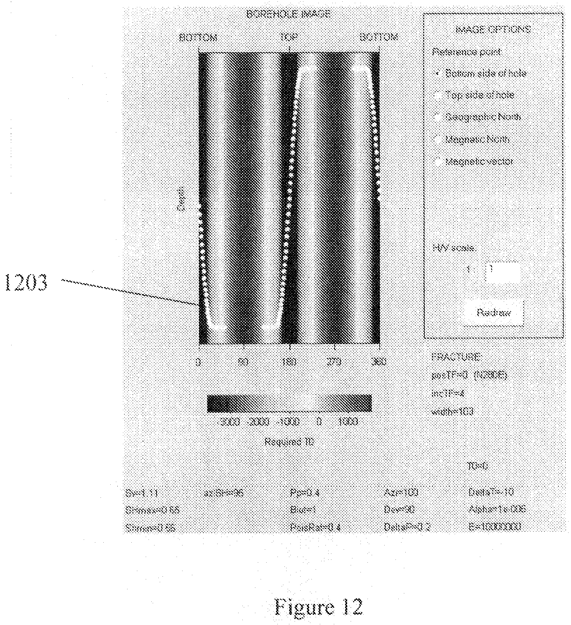

Figure 12 shows a simulated stress and tensile failure pattern in a horizontal borehole when the azimuth of the maximum horizontal stress is 5° less than the azimuth of the borehole.

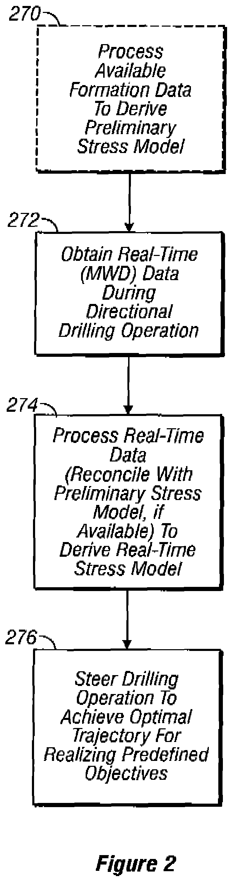

Referring to **Figure 2,** there is shown a flow diagram illustrating geomechanical wellbore steering in accordance with one embodiment of the disclosure. As shown in **Figure 2,** formation data for a region into which a borehole is to be drilled may be obtained and processed **270,** to derive a preliminary stress model for the region. In an alternate embodiment of the disclosure, information about the stress field may be obtained during drilling operations as discussed below.

In some cases, prior drilling activity in the region may have occurred such that certain *a priori* data may be available from which the stress field in the region may be modeled, at least preliminarily. Alternatively, or in addition, one or more offset or pilot boreholes may be drilled in the region to obtain either by measuring while drilling (MWD) and/or by post-drilling measurements using selected instruments, of which there are examples too numerous to itemize herein, providing data from which stress conditions within the region may be derived.

In many cases, such a pilot well may comprise a simple vertical borehole. Drilling pilot or offset wells prior to directional drilling is often carried out in the industry, although as noted above it is not essential to the advantageous and beneficial practice of the present disclosure.

With continued reference to **Figure 2,** a drilling operation is commenced. Details of the drilling system are discussed further below. Information about the stress field may be obtained using measurement-while-drilling (MWD) techniques. The real-time MWD data are processed to derive a real-time stress model **274.** The drilling system is then controlled to achieve a desired trajectory for achieving predefined objectives. Details of a drilling system are discussed next.

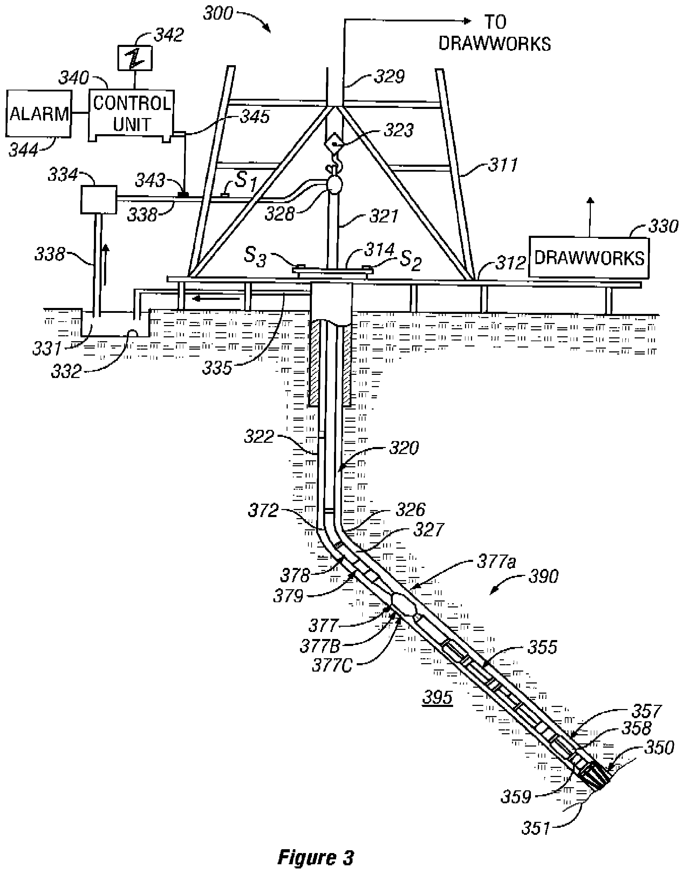

Referring next to **Figure 3,** a schematic diagram is shown of a drilling system **300** useful in various illustrative embodiments, the drilling system **300** having a drillstring **320** carrying a drilling assembly **390** (also referred to as a bottomhole assembly, or "BHA") conveyed in a "wellbore" or "borehole" **326** for drilling the wellbore **326** into geological formations **395.** The drilling system **300** may include a conventional derrick **311** erected on a floor **312** that may support a rotary table **314** that may be rotated by a prime mover such as an electric motor (not shown) at a desired rotational speed. The drillstring **320** may include tubing such as a drill pipe **322** or a coiled-tubing extending downward from the surface into the borehole **326.** The drillstring **320** may be pushed into the wellbore **326** when the drill pipe **322** is used as the tubing. For coiled-tubing applications, a tubing injector (not shown), however, may be used to move the coiled-tubing from a source thereof, such as a reel (not shown), to the wellbore **326.** A drill bit **350** may be attached to the end of the drillstring **320,** the drill bit **350** breaking up the geological formations **395** when the drill bit **350** is rotated to drill the borehole **326.** If the drill pipe **322** is used, the drillstring **320** may be coupled to a drawworks **330** via a Kelly joint **321**, a swivel **328,** and a line **329** through a pulley **323.** During drilling operations, the drawworks **330** may be operated to control the weight on the drill bit **350** or the "weight on bit," which is an important parameter that affects the rate of penetration (ROP) into the geological formations **395.** The operation of the drawworks **330** is well known in the art and is thus not described in detail herein.

During drilling operations, in various illustrative embodiments, a suitable drilling fluid **331** (also known and/or referred to sometimes as "mud" or "drilling mud") from a mud pit (source) **332** may be circulated under pressure through a channel in the drillstring **320** by a mud pump **334.** The drilling fluid **331** may pass from the mud pump **334** into the drillstring **320** via a desurger (not shown), a fluid line **338,** and the Kelly joint **321.** The drilling fluid **331** may be discharged downhole at a borehole bottom **351** through an opening (not shown) in the drill bit **350.** The drilling fluid **331** may circulate uphole through an annular space **327** between the drillstring **320** and the borehole **326** and may return to the mud pit **332** via a return line **335.** The drilling fluid **331** may act to lubricate the drill bit **350** and/or to carry borehole **326** cuttings and/or chips away from the drill bit **350.** A flow rate and/or a mud **331** dynamic pressure sensor $S_1$ may typically be placed in the fluid line **338** and may provide information about the drilling fluid **331** flow rate and/or dynamic pressure, respectively. A surface torque sensor $S_2$ and a surface rotational speed sensor $S_3$ associated with the drillstring **320** may provide information about the torque and the rotational speed of the drillstring **320,** respectively. Additionally, and/or alternatively, at least one sensor (not shown) may be associated with the line **329** and may be used to provide the hook load of the drillstring **320.**

The drill bit **350** may be rotated by only rotating the drill pipe **322.** In various other illustrative embodiments, a downhole motor **355** (mud motor) may be disposed in the bottomhole assembly (BHA) **390** to rotate the drill bit **350** and the drill pipe **322** may be rotated usually to supplement the rotational power of the mud motor **355,** if required, and/or to effect changes in the drilling direction. In various illustrative embodiments, electrical power may be provided by a power unit **378,** which may include a battery sub and/or an electrical generator and/or alternator generating electrical power by using a mud turbine coupled with and/or driving the electrical generator and/or alternator. Measuring and/or monitoring the amount of electrical power output by a mud generator included in the power unit **378** may provide information about the drilling fluid (mud) **331** flow rate.

The mud motor **355** may be coupled to the drill bit **350** via a drive shaft (not shown) disposed in a bearing assembly **357.** The mud motor **355** may rotate the drill bit **350** when the drilling fluid **331** passes through the mud motor **355** under pressure. The bearing assembly **357** may support the radial and/or the axial forces of the drill bit **350.** A stabilizer **358** may be coupled to the bearing assembly **357** and may act as a centralizer for the lowermost portion of the mud motor **355** and/or the bottomhole assembly (BHA) **390.**

A drilling sensor module **359** may be placed near the drill bit **350.** The drilling sensor module **359** may contain sensors, circuitry, and/or processing software relating to dynamic drilling parameters. Such dynamic drilling parameters may typically include bit bounce of the drill bit **350,** stick-slip of the bottomhole assembly (BHA) **390,** backward rotation, torque, shocks, borehole and/or annulus pressure, acceleration measurements, and/or other measurements of the drill bit **350** condition. A suitable telemetry and/or communication sub **372** using, for example, two-way telemetry, may also be provided, as illustrated in the bottomhole assembly (BHA) **390.** The drilling sensor module **359** may process the raw sensor information and/or may transmit the raw and/or the processed sensor information to a surface control and/or processor **340** via the telemetry system **372** and/or a transducer **343** coupled to the fluid line **338,** as shown at **345,** for example.

The communication sub **372,** the power unit **378,** and/or a formation evaluation (FE) tool **379,** such as an appropriate measuring-while-drilling (MWD) tool, for example, may all be connected in tandem with the drillstring **320.** Flex subs, for example, may be used in connecting the FE tool **379** in the bottomhole assembly (BHA) **390.** Such subs and/or FE tools **379** may form the bottomhole assembly (BHA) **390** between the drillstring **320** and the drill bit **350.** The bottomhole assembly (BHA) **390** may make various measurements, such as electrical measurements, pulsed nuclear magnetic resonance (NMR) measurements and/or nuclear density (ND) measurements, for example, while the borehole **326** is being drilled. In various illustrative embodiments, the bottomhole assembly (BHA) **390** may include one or more formation evaluation and/or other tools and/or sensors **377,** such as one or more acoustic transducers and/or acoustic detectors and/or acoustic receivers **377a,** capable of making measurements of the distance of a center of the downhole FE tool **379** from a plurality of positions on the surface of the borehole **326,** over time during drilling, and/or one or more mechanical or acoustic caliper instruments **377b.**

A mechanical caliper may include a plurality of radially spaced apart fingers, each of the plurality of the radially spaced apart fingers capable of making measurements of the distance of the center of the downhole FE tool **379** from a plurality of positions on the borehole wall **326,** over time during drilling, for example. An acoustic caliper may include one or more acoustic transducers which transmit acoustic signals into the borehole fluid and measure the travel time for acoustic energy to return from the borehole wall. In one embodiment of the disclosure, the transducer produces a collimated acoustic beam, so that the received signal may represent scattered energy from the location on the borehole wall where the beam impinges. In this regard, the acoustic caliper measurements are similar to measurements made by a mechanical caliper. The discussion of the disclosure below is based on such a configuration.

In an alternate embodiment of the disclosure, the acoustic transducer may emit a beam with wide angular coverage. In such a case, the signal received by the transducer may be a signal resulting from specular reflection of the acoustic beam at the borehole wall. The method of analysis described below would need to be modified for such a caliper.

Still referring to **Figure 3,** the communication sub **372** may obtain the signals and/or measurements and may transfer the signals, using two-way telemetry, for example, to be processed on the surface, either in the surface control and/or processor **340** and/or in another surface processor (not shown). Alternatively, and/or additionally, the signals may be processed downhole, using a downhole processor **377c** in the bottomhole assembly (BHA) **390,** for example.

The surface control unit and/or processor **340** may also receive signals from one or more other downhole sensors and/or devices and/or signals from the flow rate sensor $S_1$, the surface torque sensor $S_2$, and/or the surface rotational speed sensor $S_3$ and/or other sensors used in the drilling system **300** and/or may process such signals according to programmed instructions provided to the surface control unit and/or processor **340.** The surface control unit and/or processor **340** may display desired drilling parameters and/or other information on a display/monitor **342** that may be utilized by an operator (not shown) to control the drilling operations. The surface control unit and/or processor **340** may typically include a computer and/or a microprocessor-based processing system, at least one memory for storing programs and/or models and/or data, a recorder for recording data, and/or other peripherals. The surface control unit and/or processor **340** may typically be adapted to activate one or more alarms **344** whenever certain unsafe and/or undesirable operating conditions may occur.

In the present disclosure, a number of different ways are used for determining the direction of the principal stresses in the subsurface. In one method, measurements made by an acoustic caliper on the BHA are used to estimate the shape of the borehole as well as the location of the BHA inside the borehole during drilling operations. The basic methodology used in the present disclosure assumes that the borehole has an irregular surface, and approximates it by a piecewise elliptical surface. This is generally shown by the surface **400**. The center of the tool is at the position indicated by **455**. The distance **450** from the center of the tool to the borehole wall is measured by a caliper as the tool rotates. In the example shown, the borehole wall may be approximated by two ellipses denoted by **410** and **420**. The major axes of the two ellipses are denoted by **451** and **465** respectively. The points **400a, 400b** are exemplary points on the borehole wall at which distance measurements are made.

For the case where the tool is in a fixed position at the center of a circular borehole, the borehole wall may be represented by the equation:

$$\left(x - x_0\right)^2 + \left(y - y_0\right)^2 = R^2 \tag{1},$$

where $(x_0, y_0)$ is the coordinate of the center of the acoustic caliper tool and R is the radius.
The distance R may be given by

$$R = r_t + \frac{v\Delta t}{2} \tag{2},$$

Where $r_t$ is the tool radius, $v$ is the velocity of sound in the borehole fluid, and $\Delta t$ is the two way transit time measured by an acoustic caliper. For a mechanical caliper, the second term on the right hand side of **eq. (2)** is simply the distance measured by the caliper. Measurements of the distance R and the angle $\theta$ define the borehole wall in polar coordinates in a tool centered coordinate system.

For an elliptical borehole, the borehole wall may be represented by an equation of the form:

$$ax^2 + by^2 + cxy + dx + ey + f = 0 \tag{3}.$$

In the real world, the center of the tool does not stay in a fixed position, the caliper measurements are subject to measurement noise and the borehole wall is irregular. The combination of all these factors makes it problematic to determine the actual offset of a formation evaluation sensor on the BHA from the wall of the borehole. The problem is addressed in the *Hassan* application. The method disclosed in *Hassan* includes estimating the geometry of the borehole by performing a least-squares fit to the measurements of the distance. Estimating the geometry of the borehole may further include rejecting an outlying measurement and/or defining an image point when the measurements of the distance have a limited aperture. The method may further include providing an image of the distance to the borehole wall. The method may further include providing a 3-D view of the borehole, identifying a washout and/or identifying a defect in the casing. The method may further include using the estimated geometry of the borehole to determine a compressional-wave velocity of a fluid in the borehole. The method may further include binning the measurements made with the formation evaluation sensor.

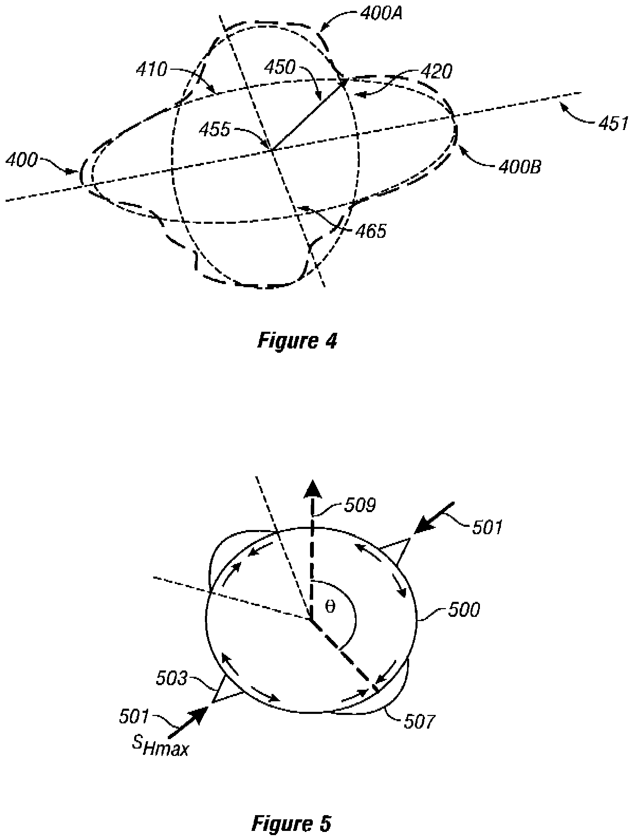

An important point to note is that the borehole geometry obtained by this method is indicative of the principal stresses in the earth formation. For a situation in which the borehole and one principal stress are vertical, the relationships are summarized in **Figure 5.** Shown therein is a cross-section of a borehole **500**. North is represented by the direction **509,** and the maximum principal stress in the horizontal plane is denoted by $S_{Hmax}$ **501**. The effect of the stress is that the borehole shape may be deformed into an ellipse in the direction **507**. The actual amount of elastic deformation due to stress is usually too small to detect using a caliper. However, breakouts may form in the direction **507** and tensile fractures may form in the direction **503** near the minor axis **501** of the ellipse. These breakouts can be detected using caliper measurements. Hence the direction of the maximum principal stress can be inferred from the azimuth of the breakouts and/or the azimuth of the tensile fractures. The determined direction may then be used to control the direction of drilling as discussed above. The magnitude of the stresses may be estimated from the strength of the rock formations. This is discussed in U.S. Patent Application Ser. No. 11/601,950 of Moos, having the same assignee as the present disclosure.

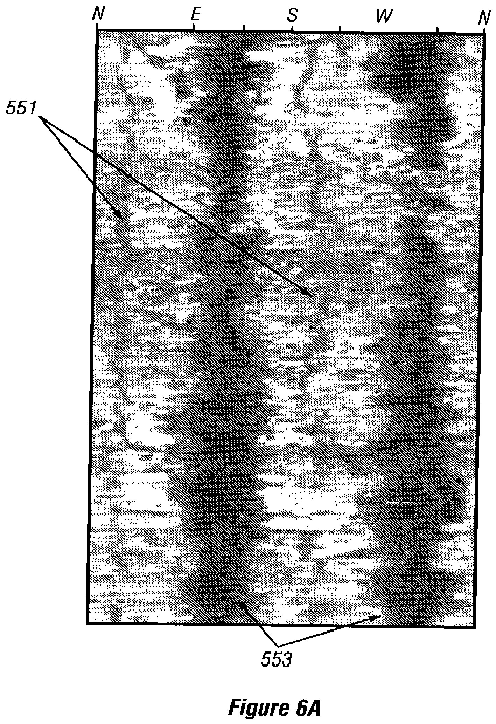

**Figure 6a** shows an exemplary acoustic image of a borehole wall. The vertical axis is depth, and the horizontal axis is the circumference of the borehole wall unfolded onto a plane. In this particular example, the center of the image corresponds to South. The tensile fractures **551** can be seen in the image. The tensile fractures are oriented 90° from the breakouts **553.** It is worth noting that the breakouts are characterized by a weaker signal (darker color) than the rest of the image, indicating a smaller acoustic contrast with the borehole fluid. Detailed analysis of the breakouts is discussed next.

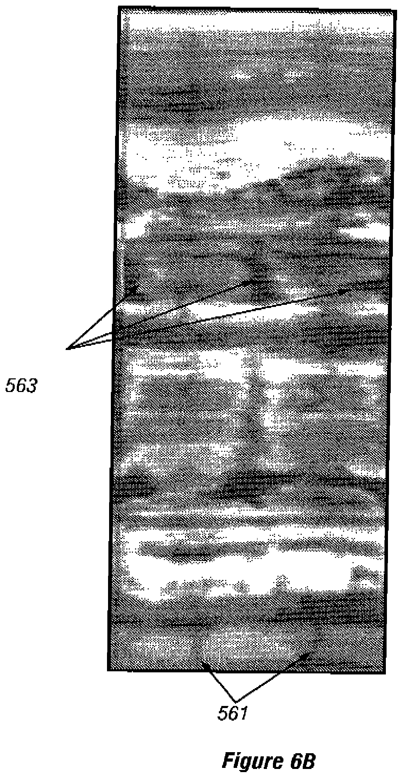

Breakouts and tensile fractures (also referred to as drilling-induced fractures) can also be seen on other images of the borehole wall. For example, **Figure 6b** shows a resistivity image of a borehole wall. Such a resistivity image is obtained by using a microresistivity imaging tool. Tensile fractures are indicated by **561** while breakouts are indicated by **563.** Thus, resistivity images may be used to identify the directions of the principal stress. It should be noted that other types of images, such as density images, also show breakouts and tensile fractures and can thus be used to identify the directions of principal stress.

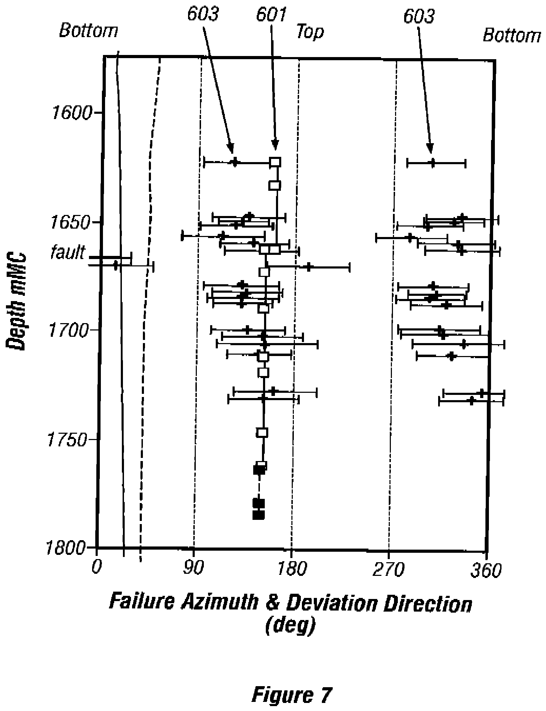

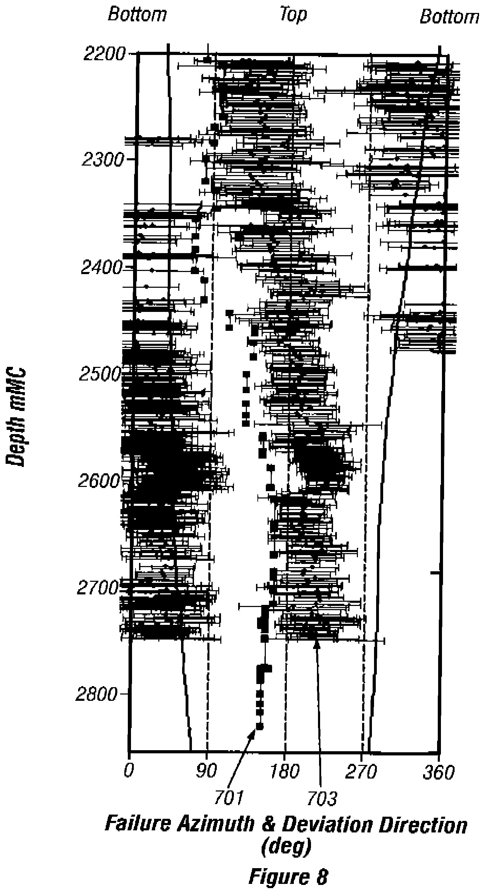

Turning now to **Figure 7,** a breakout analysis of an exemplary borehole is shown. The points connected the line **601** are the toolface angle of the BHA as a function of depth. For the purposes of this disclosure, the toolface angle is the orientation of a reference mark on the BHA. The orientation of the BHA may be determined using a magnetometer or a gyro. The horizontal bars indicated by **603** show the extent of breakouts measured in the borehole (corresponding to the width of the dark patches in **Figure 6).** As can be seen, the toolface angle falls within the breakout zone for the entire displayed section. Another portion of the same borehole is shown in **Figure 8.** The toolface angles are given by **701** and are clearly outside the breakout zone **703.** The difference between **Figures 7** and **8** is that the drilling over the depth interval in **Figure 7** was carried out with a BHA in which tool face preferentially tends to orient in the direction of hole enlargements, making it difficult to orient the hole in a different direction. The results are clear: in such circumstances, the borehole will tend to follow the direction of breakouts.

In contrast, the drilling for the interval shown in **Figure 8** was carried out using different BHAs and with a directional control active. With the directional control active, it is seen to be possible to overcome the natural tendency of the borehole to follow the breakouts (direction of minimum principal stress). An exemplary device for directional drilling is disclosed in U.S. Patent 7,287,604 to Aronstam et al., having the same assignee as the present disclosure.

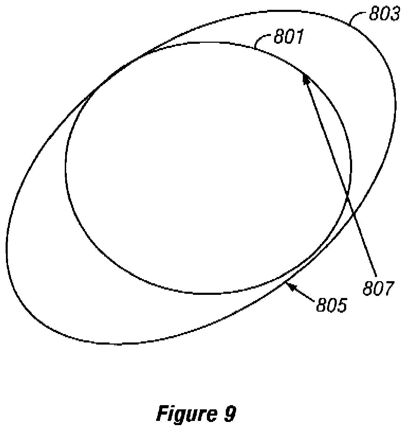

It should further be noted that in cases where the borehole wall has not caved in, the geometry may appear to be circular, but there would be a decrease in amplitude of the reflected caliper signal if portions of the borehole wall are starting to slough off. This is schematically illustrated by **Figure** 9 where a circular borehole is represented by **801.** Due to stress, there is a weakened portion denoted by the zone between **801** and the ellipse **803.** The borehole when mapped using first arrival reflections appears to have the shape **801** but the reflections from the portion **807** will be weaker than those from the portion **805.** See **Figure 6.** In addition, if the borehole is mapped using second arrival reflections, the shape given by **803** would be obtained. The present disclosure takes amplitude changes of the reflected caliper signal into consideration for determining the principal stress directions.

In an exemplary scenario, a pilot vertical well is drilled, and then logged with an electrical image tool. Analysis of the images using methods described above may reveal drilling-induced tensile wall fractures that indicate a relatively constant maximum horizontal stress direction. Then, a lateral well may drilled from the pilot well, kicking off above the reservoir interval and reaching horizontal within the depth interval penetrated by the pilot well for which the images of tensile wall fractures indicating the maximum horizontal stress orientation were obtained. The orientation of the lateral is chosen to be identical to the $S_{Hmax}$ orientation revealed by analysis of the image logs in the vertical well, such that, when hydraulically fractured, the fractures would grow axially along the wellbore axis. The stress state is such that the fractures will be vertical (that is, the magnitude of $S_{hmin}$ is less than the magnitude of $S_v$). In other instances, the well might be drilled 90 degrees from the azimuth of $S_{Hmax}$ to ensure development of radial fractures perpendicular to the well.

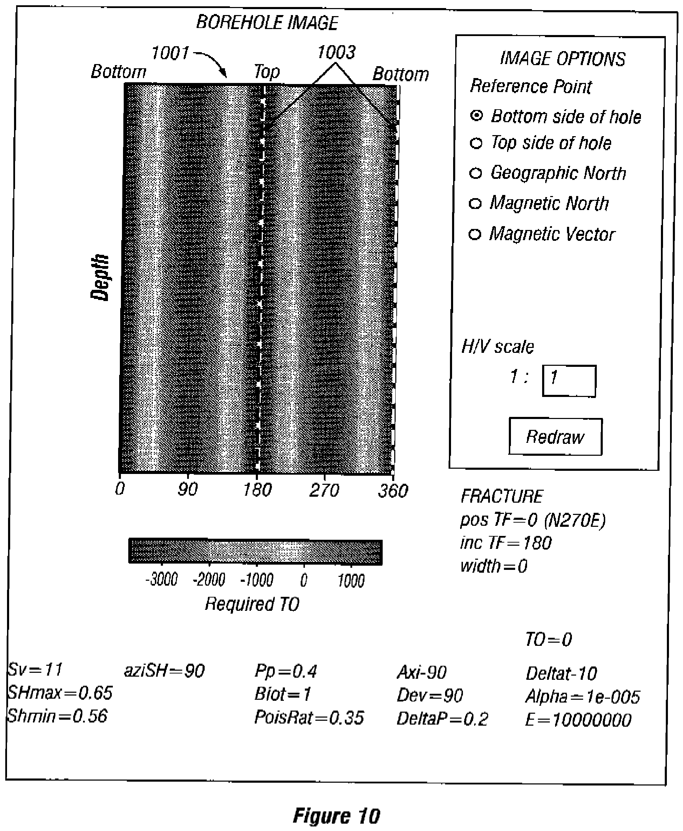

During drilling of the lateral well, geosteering systems are employed to monitor the orientation of the well and its position within the reservoir. LWD image logs are also obtained to provide real-time information about wellbore wall failures that reveal the relative orientation of the well with respect to the principal stresses. The images are analyzed while drilling is under way to detect drilling-induced features that occur at specific points around the circumference of the well and also are created below the bit by excessive weight on bit and detected once the well has drilled through them. In some cases, it is possible to deliberately induce failures from which to determine the stresses by modifying drilling practice. An example is by increasing circulation rate to cool the wellbore to induce tensile failure. Another example is by raising drilling weight on bit to increase the occurrence of induced failures below the bit. Initially, the images would reveal axially oriented tensile fractures **1003** in the borehole **1001.** Note that in the resistivity image of **Figure 10,** the abscissa is the circumference of the borehole and the ordinate is the drilling depth. Analysis of the stress conditions necessary to create these axial fractures confirm that the well has been drilled along a principal stress direction, and thus there is no need to change the well azimuth.

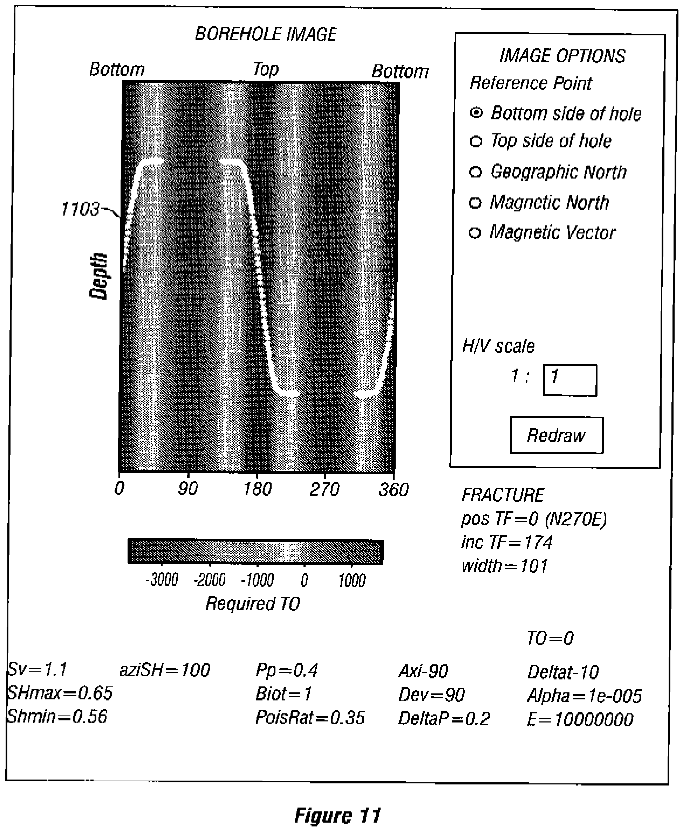

At slightly greater depth, tensile wall fractures develop with a shape indicated by **1103** in **Figure 11.** For this simulation, the borehole azimuth is 90° and the azimuth of $S_{Hmax}$ is 100°. **Figure 12** shows the tensile fracture **1203** when the borehole azimuth is 100° while the azimuth of $S_{Hmax}$ is 95°. Based on these simulations, it is clear when the steering direction has to be increased and when it has to be decreased to maintain the desired trajectory.

At the end of the drilling run, images may be acquired at higher resolution than is possible with LWD imaging devices, using wireline logging tools run in the well following well-known procedures for logging horizontal wells. Stimulation intervals may be chosen where axial fractures occur in the images, because these are where the lowest pressures are required to stimulate the well and where axial fractures with good connectivity to the well are most likely to be formed. The well may then be cased, and the casing is then perforated at the chosen intervals to hydraulically fracture the formation, thus avoiding intervals where the image data reveal that the well is drilled at a finite angle to the local orientation of $S_{Hmax}$ and thus that hydraulic fractures will be more difficult to create and will have poorer connectivity to the wellbore.

A similar approach can be applied regardless of whether wells or the principal stresses are deviated or vertical; where the desired direction is parallel to or oblique to any of the in situ principal stress directions; where the features used to identify the stress field orientation with respect to the wellbore are breakouts, tensile fractures, or any other failure features; where the stress field orientation is determined using other measurements such as sonic or electrical measurements. We next discuss such alternative methods.

As would be appreciated by those of ordinary skill, a fundamental principle is that most earth materials have elastic properties that are functions of stress. In the absence of other effects, they are stiffer in the direction in which the largest compressive stress acts. Dipole sonic logging tools excite a bending mode in a well which, when the well is drilled in such a way that the stresses acting on the sides of the well are different (for example, a vertical well in a formation where the horizontal stresses are different such that $S_{Hmax}$ is greater than $S_{Hmin}$) naturally splits into two independent modes. One of these bends the well in the direction of the greatest stress, which in the case of the vertical well is the $S_{Hmax}$ stress, and one bends the well in the direction of the least stress, which in the case of the vertical well is the $S_{Hmin}$ stress. The mode that bends the well in the direction of $S_{Hmax}$ travels faster than the mode that bends the well in the direction of $S_{Hmin}$. By recording the orientations of the tool and the well, and by running a dipole log in a "Crossed-dipole" configuration, and then by analysis of the recorded waveforms using known methods, it is possible to determine the orientations of the maximum and minimum stresses using the determination of the directions in which the two modes bend the well. In cross-dipole measurements, the velocity of shear waves in the formation having two different polarizations is measured. In deviated wells or in horizontal wells the geometry is more complicated but the method can still be applied in many cases. Such a method is discussed in U.S. Patent 6,098,021 to Tang et al., having the same assignee as the present disclosure.

An alternative method of using acoustic data to detect stress orientation, is using an azimuthally-recorded acoustic log. This log records the speed of propagation of acoustic waves propagating along the surface of the well bore as a function of orientation. Due to the local stress concentration, the speed of such acoustic waves is a function of orientation around the well. Because the speed of propagation in earth materials is stress-sensitive, it is possible by measuring the azimuthal dependence of acoustic velocity to determine the orientations and relative magnitudes of the in situ stresses.

Another method for determining stress directions in the subsurface uses multicomponent induction resistivity measurements. This is disclosed in U.S. Patent 7,359,800 to Rabinovich et al., having the same assignee as the present disclosure. In particular, the $H_{xx}$, $H_{yy}$ and $H_{xy}$ measurements are responsive to resistivity anisotropy. Resistivity anisotropy can have several origins including laminations and bedding as well as natural and drilling induced and hydraulic fractures. It has been found that even in the absence of fracturing, these measurements indicate directions in which fractures would form if the stresses were greater. It is also worth noting that the direction of tensile fractures in the subsurface determined by the resistivity measurements is orthogonal to the breakout direction, so that directional wells drilled for the purpose of intersecting these fractures would be in the preferred direction even without directional control.

It is known to those skilled in the art that principal stresses are not always vertical and horizontal and that the stress field may be rotated by the presence of the borehole. When the effect of the borehole significantly alters the local stress field magnitude and orientation from that of the far field, the field away from the borehole, the deep reading multicomponent resistivity measurements made with either wireline or logging while drilling tools can be analyzed to determine the orientation of the transverse anisotropic and biaxial anisotropic stress field. In thick homogenous isotropic media, the appearance of tensile fractures gives rise to a direction of anisotropy which can be determined from multi-component induction logging data which can be processed using for example MultiFrequency Focusing to remove the effect of the near borehole environment to determine the orientation of the tensile fractures and, hence, infer the orientation of the far field principal stresses.

In layered media tensile fractures are often normal to the bedding and give rise to biaxial anisotropy. The principal directions of the biaxial anisotropy can be determined from the multi-component resistivity measurements and the orientation of the principal stress directions inferred. This is discussed in U.S. Patent 7,317,991 to Wang et al., having the same assignee as the present disclosure.

Nuclear measurements may also be used to determine the shape of the borehole. The use of gamma ray measurements is discussed in U.S. Patent Application Ser. No. 11/770,209 of Madigan et al., having the same assignee as the present disclosure. As discussed in *Madigan,* using a heuristic model, a known value of mud density, and a known value of formation density, it is possible to determine the standoff of a gamma ray density tool as a function of azimuth. The determined offset can then be used in combination with the method of *Hassan* to map the borehole wall.

The analysis of the measurements made downhole may be carried out by the downhole processor and/or the surface processor. When a downhole processor is used for the analysis, it becomes possible to control the drilling direction substantially in real time, i.e., without the delay inherent in telemetering of data uphole and instructions downhole. Implicit in the control and processing of the data is the use of a computer program implemented on a suitable machine readable medium that enables the processor to perform the control and processing. The machine readable medium may include ROMs, EPROMs, EAROMs, Flash Memories and Optical disks.

**Claims**

1.  A method of evaluating an earth formation, the method comprising:

    inducing a stress in said earth formation proximate a borehole to form a feature in the earth formation related to said induced stress;
    conveying a bottomhole assembly (BHA) (390) into said borehole (326);
    making measurements indicative of a geometry of the borehole during rotation of the BHA; wherein the geometry of the borehole is indicative of the feature formed in the earth formation;
    using the measurements of said borehole geometry to provide an image of the borehole;
    estimating an azimuthal variation with borehole depth of the induced stress in the formation from the image; and altering a drilling parameter of the BHA (390) using the estimated azimuthal variation with depth of the induced stress in the earth formation; wherein making measurements indicative of the geometry of the borehole further comprises measuring a travel time for an acoustic signal from the BHA (390) to a wall of the borehole (326) at a plurality of azimuthal orientations of the BHA (390), and wherein estimating the azimuthal variation with borehole depth of the induced stress further comprises using the travel time at the plurality of azimuthal orientations of the BHA to estimate the geometry of the borehole (326) and a position of the BHA (390) inside the borehole (326).

2.  The method of claim 1 wherein altering the drilling parameter further comprises controlling a direction of drilling.

3.  The method of claim 1 further comprising:

    making a measurement of an amplitude of a reflection of the acoustic signal from the wall of the borehole, and using the amplitude of the reflection to identify a breakout.

4.  The method of claim 1 wherein making measurements indicative of the geometry of the borehole further comprises measuring a first velocity of a shear wave having a first polarization in the formation and measuring a second velocity of a shear wave having a second polarization in the formation.

5.  The method of claim 1 wherein making measurements indicative of the geometry of the borehole further comprises making measurements with:

    a multicomponent resistivity instrument in the borehole at a plurality of azimuthal orientations of the BHA.

6.  The method of claim 1 wherein making measurements indicative of the geometry of the borehole further comprises making measurements with at least one of

    (i) a resistivity imaging tool; and
    (ii) a gamma-ray density tool.

7.  The method of claim 1 wherein estimating the azimuthal variation with borehole depth of the induced stress in the formation further comprises identifying a direction of at least one of: (i) a maximum principal stress, and (ii) a minimum principal stress.

8.  The method of claim 7 wherein altering the drilling parameter further comprises using a difference between a direction of the borehole and a direction of a tensile fracture in the borehole.

9.  A system for evaluating an earth formation, the system comprising:

    a drill string (320) configured to induce a stress in the earth formation proximate a borehole to form a feature in the earth formation related to the induced stress;
    a bottomhole assembly (BHA) on said drill string (320) configured to be conveyed into a borehole;
    a sensor assembly on the BHA configured to make measurements indicative of a geometry of the borehole in the earth formation during rotation of the BHA; wherein the geometry of the borehole is indicative of the feature formed in the earth formation due to the induced stress in the earth formation; and
at least one processor configured to:

(i) use the measurements indicative of the borehole geometry to provide an image of the borehole and estimate an azimuthal variation with borehole depth of the induced stress in the formation from the image, and
(ii) alter a drilling parameter of the BHA using the estimated azimuthal variation with borehole depth of the induced stress in the formation, and

wherein the sensor assembly further comprises an acoustic assembly configured to measure a travel time of an acoustic signal from the BHA to a wall of the borehole at a plurality of azimuthal orientations of the BHA, and wherein the at least one processor is configured to estimate the azimuthal variation with borehole depth of the induced stress by using the travel time at the plurality of azimuthal orientations of the BHA to estimate the geometry of the borehole and a position of the BHA inside the borehole.

10. The system of claim 9 wherein the drilling parameter altered by the at least one processor further comprises a direction of drilling.

11. The system of claim 9 wherein the sensor assembly is further configured to make a measurement of an amplitude of a reflection of the acoustic signal from the wall of the borehole, and wherein the at least one processor is further configured to use the amplitude of the reflection to identify a breakout.

12. The system of claim 9 wherein the sensor assembly further comprises an acoustic source configured to generate a first acoustic wave having a first polarization in the formation and a second acoustic wave having a second polarization in the formation, and wherein the at least one processor is further configured to use a velocity of the first acoustic wave and a velocity of the second acoustic wave to estimate the azimuthal variation of the stress.

13. The system of claim 9 wherein the sensor assembly further comprises:

a multicomponent resistivity instrument in the borehole configured to measure a formation resistivity property at a plurality of azimuthal orientations of the BHA.

14. The system of claim 9 wherein the sensor assembly further comprises at least one of

(i) a resistivity imaging tool configured to make measurements indicative of a resistivity of the formation; and
(ii) a gamma ray density tool.

15. The system of claim 9 wherein the at least one processor is further configured to:

alter the drilling parameter by using a difference between a direction of the borehole and a direction of a tensile fracture in the borehole; and/or
estimate the azimuthal variation with depth of the stress in the formation by further identifying a direction of at least one of: (i) a maximum principal stress, and (ii) a minimum principal stress.

**Patentansprüche**

1. Verfahren zum Bewerten einer Erdformation, wobei das Verfahren Folgendes umfasst:

das Induzieren einer Spannung in der Erdformation nahe einem Bohrloch, um ein Merkmal in der Erdformation zu bilden, das mit der induzierten Spannung in Zusammenhang steht,
das Befördern einer Bohrlochsohlengarnitur (BHA) (390) in das Bohrloch (326),
das Vornehmen von Messungen, die auf eine Geometrie des Bohrlochs während einer Drehung der BHA schließen lassen, wobei die Geometrie des Bohrlochs auf das in der Erdformation gebildete Merkmal schließen lässt,
das Verwenden der Messungen der Bohrlochgeometrie, um ein Bild des Bohrlochs bereitzustellen,
das Abschätzen einer Azimutalvariation mit der Bohrlochtiefe der induzierten Spannung in der Formation aus dem Bild und

EP 2 179 134 B1

das Abändern eines Bohrparameters der BHA (390) unter Verwendung der abgeschätzten Azimutalvariation mit der Bohrlochtiefe der induzierten Spannung in der Erdformation, wobei das Vornehmen von Messungen, die auf eine Geometrie des Bohrlochs schließen lassen, weiter das Messen einer Laufzeit für ein akustisches Signal von der BHA (390) zu einer Wand des Bohrlochs (326) bei der Vielzahl von Azimutalausrichtungen der BHA (390) umfasst und wobei das Abschätzen der Azimutalvariation mit der Bohrlochtiefe der induzierten Spannung weiter das Verwenden der Laufzeit bei der Vielzahl von Azimutalausrichtungen der BHA umfasst, um die Geometrie des Bohrlochs (326) und eine Position der BHA (390) innerhalb des Bohrlochs (326) abzuschätzen.

2. Verfahren nach Anspruch 1, wobei das Abändern des Bohrparameters weiter das Steuern einer Richtung des Bohrens umfasst.

3. Verfahren nach Anspruch 1, das weiter Folgendes umfasst:

   das Vornehmen einer Messung einer Amplitude einer Reflexion des akustischen Signals von der Wand des Bohrlochs und
   das Verwenden der Amplitude der Reflexion, um einen Durchbruch zu identifizieren.

4. Verfahren nach Anspruch 1, wobei das Vornehmen von Messungen, die auf eine Geometrie des Bohrlochs schließen lassen, weiter das Messen einer ersten Geschwindigkeit einer Scherwelle, die eine erste Polarisation in der Formation hat, und das Messen einer zweiten Geschwindigkeit einer Scherwelle, die eine zweite Polarisation in der Formation hat, umfasst.

5. Verfahren nach Anspruch 1, wobei das Vornehmen von Messungen, die auf eine Geometrie des Bohrlochs schließen lassen, weiter das Vornehmen von Messungen mit Folgendem umfasst:

   einem Mehrkomponenten-Widerstandsinstrument in dem Bohrloch bei der Vielzahl von Azimutalausrichtungen der BHA.

6. Verfahren nach Anspruch 1, wobei das Vornehmen von Messungen, die auf eine Geometrie des Bohrlochs schließen lassen, weiter das Vornehmen von Messungen mit wenigstens einem von Folgendem umfasst:

   (i) einem Widerstandsbildgebungswerkzeug und
   (ii) einem Gammastrahlen-Dichtewerkzeug.

7. Verfahren nach Anspruch 1, wobei das Abschätzen der Azimutalvariation mit der Bohrlochtiefe der induzierten Spannung in der Formation weiter das Identifizieren einer Richtung wenigstens eines von Folgendem umfasst: (i) einer maximalen Hauptspannung und (ii) einer minimalen Hauptspannung.

8. Verfahren nach Anspruch 7, wobei das Abändern des Bohrparameters weiter das Verwenden eines Unterschieds zwischen einer Richtung des Bohrlochs und einer Richtung eines Spannungsrisses in dem Bohrloch umfasst.

9. System zum Bewerten einer Erdformation, wobei das System Folgendes umfasst:

   einen Bohrstrang (320), der dafür konfiguriert ist, eine Spannung in der Erdformation nahe einem Bohrloch zu induzieren, um ein Merkmal in der Erdformation zu bilden, das mit der induzierten Spannung in Zusammenhang steht,
   eine Bohrlochsohlengarnitur (BHA) an dem Bohrstrang (320), die dafür konfiguriert ist, in das Bohrloch befördert zu werden,
   eine Sensorbaugruppe an der BHA, die dafür konfiguriert ist, Messungen vorzunehmen, die auf eine Geometrie des Bohrlochs während einer Drehung der BHA schließen lassen, wobei die Geometrie des Bohrlochs auf das in der Erdformation auf Grund der induzierten Spannung in der Erdformation gebildete Merkmal schließen lässt, und
   wenigstens einen Prozessor, der für Folgendes konfiguriert ist:

      (i) die Messungen, die auf die Bohrlochgeometrie schließen lassen, zu verwenden, um ein Bild des Bohrlochs bereitzustellen und eine Azimutalvariation mit der Bohrlochtiefe der induzierten Spannung in der Formation aus dem Bild abzuschätzen, und

12

(ii) einen Bohrparameter der BHA unter Verwendung der abgeschätzten Azimutalvariation mit der Bohrlochtiefe der induzierten Spannung in der Formation abzuändern, und

wobei die Sensorbaugruppe weiter eine akustische Baugruppe umfasst, die dafür konfiguriert ist, eine Laufzeit für ein akustisches Signal von der BHA zu einer Wand des Bohrlochs bei der Vielzahl von Azimutalausrichtungen der BHA zu messen, und wobei der wenigstens eine Prozessor dafür konfiguriert ist, die Azimutalvariation mit der Bohrlochtiefe der induzierten Spannung unter Verwendung der Laufzeit bei der Vielzahl von Azimutalausrichtungen der BHA abzuschätzen, um die Geometrie des Bohrlochs und eine Position der BHA innerhalb des Bohrlochs abzuschätzen.

10. System nach Anspruch 9, wobei der Bohrparameter, der durch den wenigstens einen Prozessor abgeändert wird, weiter eine Richtung des Bohrens umfasst.

11. System nach Anspruch 9, wobei die Sensorbaugruppe weiter dafür konfiguriert ist, eine Messung einer Amplitude einer Reflexion des akustischen Signals von der Wand des Bohrlochs vorzunehmen, und wobei der wenigstens ein Prozessor weiter dafür konfiguriert ist, die Amplitude der Reflexion zu verwenden, um einen Durchbruch zu identifizieren.

12. System nach Anspruch 9, wobei die Sensorbaugruppe weiter eine akustische Quelle umfasst, die dafür konfiguriert ist, eine erste akustische Welle, die eine erste Polarisation in der Formation hat, und eine zweite akustische Welle, die eine zweite Polarisation in der Formation hat, zu erzeugen, und wobei der wenigstens eine Prozessor weiter dafür konfiguriert ist, eine Geschwindigkeit der ersten akustischen Welle und eine Geschwindigkeit der zweiten akustischen Welle zu verwenden, um die Azimutalvariation der Spannung abzuschätzen.

13. System nach Anspruch 9, wobei die Sensorbaugruppe weiter Folgendes umfasst:

ein Mehrkomponenten-Widerstandsinstrument in dem Bohrloch, das dafür konfiguriert ist, eine Formationswiderstandseigenschaft bei der Vielzahl von Azimutalausrichtungen der BHA zu messen.

14. System nach Anspruch 9, wobei die Sensorbaugruppe weiter wenigstens eines von Folgendem umfasst:

(i) ein Widerstandsbildgebungswerkzeug, das dafür konfiguriert ist, Messungen vorzunehmen, die auf einen spezifischen Widerstand der Formation schließen lassen, und
(ii) ein Gammastrahlen-Dichtewerkzeug.

15. System nach Anspruch 9, wobei der wenigstens ein Prozessor weiter für Folgendes konfiguriert ist:

den Bohrparameter unter Verwendung eines Unterschieds zwischen einer Richtung des Bohrlochs und einer Richtung eines Spannungsrisses in dem Bohrloch abzuändern und/oder
die Azimutalvariation mit der Bohrlochtiefe der induzierten Spannung in der Formation weiter durch das Identifizieren einer Richtung wenigstens eines von Folgendem abzuschätzen: (i) einer maximalen Hauptspannung und (ii) einer minimalen Hauptspannung.

**Revendications**

1. Procédé d'évaluation d'une formation terrestre, le procédé comprenant :

l'induction d'une contrainte dans ladite formation terrestre à proximité d'un trou de forage pour former une caractéristique dans la formation terrestre se rapportant à ladite contrainte induite ;
le transport d'un assemblage de fond de trou (BHA) (390) dans ledit trou de forage (326) ;
la réalisation de mesures indicatives d'une géométrie du trou de forage au cours de la rotation du BHA; dans lequel la géométrie du trou de forage est indicative de la caractéristique formée dans la formation terrestre ;
l'utilisation des mesures de ladite géométrie de trou de forage pour fournir une image du trou de forage ;
l'estimation d'une variation azimutale avec la profondeur de trou de forage de la contrainte induite dans la formation à partir de l'image ; et
la modification d'un paramètre de forage du BHA (390) en utilisant la variation azimutale estimée avec la profondeur de la contrainte induite dans la formation terrestre ; dans lequel la réalisation de mesures indicatives de la géométrie du trou de forage comprend en outre la mesure d'un temps de déplacement pour un signal acoustique à partir du BHA (390) à une paroi du trou de forage (326) dans une pluralité d'orientations azimutales du BHA (390), et dans lequel l'estimation de la variation azimutale avec la profondeur de trou de forage de la contrainte comprend en outre l'utilisation du temps de déplacement dans la pluralité d'orientations azimutales du BHA pour estimer la géométrie du trou de forage (326) et une position du BHA (390) à l'intérieur du trou de forage (326).

2. Procédé selon la revendication 1, dans lequel la modification du paramètre de forage comprend en outre la commande de la direction de forage.

3. Procédé selon la revendication 1, comprenant en outre :

la réalisation d'une mesure d'une amplitude d'une réflexion du signal acoustique depuis la paroi du trou de forage, et
l'utilisation de l'amplitude de la réflexion pour identifier un déblocage.

4. Procédé selon la revendication 1, dans lequel la réalisation de mesures indicatives de la géométrie du trou de forage comprend en outre la mesure d'une première vitesse d'une onde de cisaillement ayant une première polarisation dans la formation et la mesure d'une seconde vitesse d'une onde de cisaillement ayant une seconde polarisation dans la formation.

5. Procédé selon la revendication 1, dans lequel la réalisation de mesures indicatives de la géométrie du trou de forage comprend en outre la réalisation de mesures avec :

un instrument de résistivité à composants multiples dans le trou de forage dans une pluralité d'orientations azimutales du BHA.

6. Procédé selon la revendication 1, dans lequel la réalisation de mesures indicatives de la géométrie du trou de forage comprend en outre la réalisation de mesures avec au moins l'un parmi :

(i) un outil d'imagerie de résistivité ; et
(ii) un outil de densité de rayons gamma.

7. Procédé de trou de forage de la contrainte induite dans la formation comprend en outre l'identification d'une direction d'au moins l'une parmi (i) une contrainte principale maximale et (ii) une contrainte principale minimale.

8. Procédé selon la revendication 7, dans lequel la modification du paramètre de forage comprend en outre l'utilisation d'une différence entre une direction du trou de forage et une direction d'une fracture de traction dans le trou de forage.

9. Système d'évaluation d'une formation terrestre, le système comprenant :

une colonne de forage (320) configurée pour induire une contrainte dans la formation terrestre à proximité d'un trou de forage afin de former une caractéristique dans la formation terrestre en rapport avec la contrainte induite ;
un assemblage de fond de trou (BHA) sur ladite colonne de forage (320) configuré pour être transporté dans un trou de forage ;
un ensemble de capteurs sur le BHA configuré pour effectuer des mesures indicatives d'une géométrie du trou de forage dans la formation terrestre au cours de la rotation du BHA; dans lequel la géométrie du trou de forage est indicative de la caractéristique formée dans la formation terrestre en raison de la contrainte induite dans la formation terrestre ; et
au moins un processeur configuré pour :

(i) utiliser les mesures indicatives de la géométrie de trou de forage pour fournir une image du trou de forage et estimer une variation azimutale avec la profondeur de trou de forage de la contrainte induite dans la formation à partir de l'image, et
(ii) modifier un paramètre de forage du BHA en utilisant la variation azimutale estimée avec une profondeur de trou de forage de contrainte induite dans la formation, et

dans lequel l'ensemble de capteurs comprend en outre un ensemble acoustique configuré pour mesurer un temps de déplacement d'un signal acoustique à partir du BHA à une paroi du trou de forage dans une pluralité d'orientations azimutales du BHA, et dans lequel le au moins un processeur est configuré pour estimer la variation azimutale avec la profondeur de trou de forage de la contrainte induite en utilisant le temps de déplacement dans la pluralité d'orientations azimutales du BHA afin d'estimer la géométrie du trou de forage et une position du BHA à l'intérieur du trou de forage.

**10.** Système selon la revendication 9, dans lequel le paramètre de forage modifié par le au moins un processeur comprend en outre une direction de forage.

**11.** Système selon la revendication 9, dans lequel l'ensemble de capteurs est en outre configuré pour effectuer une mesure d'une amplitude d'une réflexion du signal acoustique depuis la paroi du trou de forage, et dans lequel le au moins un processeur est en outre configuré pour utiliser l'amplitude de la réflexion afin d'identifier un déblocage.

**12.** Système selon la revendication 9, dans lequel l'ensemble de capteurs comprend en outre une source acoustique configurée pour générer une première onde acoustique ayant une première polarisation dans la formation et une seconde onde acoustique ayant une seconde polarisation dans la formation, et dans lequel le au moins un processeur est en outre configuré pour utiliser une vitesse de la première onde acoustique et une vitesse de la seconde onde acoustique pour estimer la variation azimutale de la contrainte.

**13.** Système selon la revendication 9, dans lequel l'ensemble de capteurs comprend en outre :

un instrument de résistivité à composants multiples dans le trou de forage configuré pour mesurer une propriété de résistivité de formation dans une pluralité d'orientations azimutales du BHA.

**14.** Système selon la revendication 9, dans lequel l'ensemble de capteurs comprend en outre au moins l'un des suivants :

(i) un outil d'imagerie de résistivité configuré pour effectuer des mesures indicatives d'une résistivité de la formation ; et
(ii) un outil de densité de rayons gamma.

**15.** Système selon la revendication 9, dans lequel le au moins un processeur est en outre configuré pour :

modifier le paramètre de forage en utilisant une différence entre une direction du trou de forage et une direction d'une fracture de traction dans le trou de forage ; et/ou
estimer la variation azimutale avec la profondeur de la contrainte dans la formation en identifiant en outre une direction d'au moins l'une parmi (i) une tension principale maximale et (ii) une tension principale minimale.

$$S = A^T S A$$

$$S = \begin{bmatrix} S_{11} & S_{12} & S_{13} \\ S_{21} & S_{22} & S_{23} \\ S_{31} & S_{32} & S_{33} \end{bmatrix}$$

**Figure 1A**

$$A = \begin{matrix} & S' \\ & (new) \end{matrix} \begin{bmatrix} a_{11} & a_{12} & a_{13} \\ a_{21} & a_{22} & a_{23} \\ a_{31} & a_{32} & a_{33} \end{bmatrix} \begin{matrix} S \\ (old) \end{matrix}$$

**Figure 1B**

$$S' = \begin{bmatrix} S_1 & 0 & 0 \\ 0 & S_2 & 0 \\ 0 & 0 & S_3 \end{bmatrix}$$

**Figure 1C**

**Figure 2**

**Figure 3**

**Figure 4**

**Figure 5**

Figure 6A

*Figure 6B*

*Figure 7*

*Failure Azimuth & Deviation Direction
(deg)*

**Figure 8**

**Figure 9**

**Figure 10**

**Figure 11**

**Figure 12**

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5318123 A
- US 4713968 A
- US 7181380 B, Dusterhoft
- US 601950 A, Moos
- US 7287604 B, Aronstam

- US 6098021 A, Tang
- US 7359800 B, Rabinovich
- US 7317991 B, Wang
- US 770209 A, Madigan

### Non-patent literature cited in the description

- **REZMER-COOPER et al.** The Use of Resistivity-at-the-Bit Images and Annular Pressure While Drilling in Preventing Drilling Problems (IADC/SPE 59225). *IADC/SPE Drilling Conference,* 23 February 2000, 1-13